# EUROPEAN PATENT SPECIFICATION

(11) **EP 2 595 456 B1**
(45) Date of publication and mention of the grant of the patent: **26.09.2018**
(21) Application number: 12192089.6
(22) Date of filing: 09.11.2012
(51) Int. Cl.: H05B 37/02

(54) **Transmitter, receiver and wireless lighting system**
Sender, Empfänger und drahtloses Beleuchtungssystem
Émetteur, récepteur et système d'éclairage sans fil

(30) Priority: 16.11.2011 GB 201119765
(43) Date of publication of application: 22.05.2013
(73) Proprietor: Lite IP Limited, Fareham PO15 5SH (GB)
(72) Inventor: Lippold, David, Fareham, Hampshire PO15 5AP (GB)
(74) Representative: D Young & Co LLP

(56) References cited:
- WO-A1-2011/055259
- US-A- 5 598 042
- US-A1- 2004 051 467
- US-A1- 2006 154 642
- US-A1- 2006 215 345
- US-A1- 2008 180 935
- US-A1- 2009 315 485
- US-A1- 2010 052 574
- US-A1- 2011 115 384
- US-A1- 2011 133 655
- US-B2- 6 636 005

## Description

The present invention relates to a transmitter, a receiver and a wireless lighting system.

The installation of controlled lighting systems or the addition of controls to existing lighting systems at commercial and industrial premises tends to be complex, in part due to the large number of lights that each need to be controlled in turn due to difficulty adding cabling to existing cable containment conduits, and in part because many lights may be located in or in the grounds of such premises that are difficult to repeatedly access, such as in a warehouse ceiling.

Previously it has been proposed to control lights using a wireless system that replicates the functionality of normal control signalling in a wired system, by installing a wireless receiver in each light and implementing a network protocol to wirelessly control the lights.

However, where many lights operate on a secure network and are responsive to a shared transmitter, the efficiency and responsiveness of the lighting control system can drop dramatically.

The present invention seeks to address or mitigate this problem.

A transmitter is provided in accordance with claim 1.

A receiver is provided in accordance with claim 5.

A wireless lighting system, comprising at least one transmitter according to claim 1 and at least one receiver according to claim 5, is provided in accordance with claim 10.

Further respective aspects and features of the invention are defined in the dependent claims.

Embodiments of the present invention will now be described by way of example with reference to the accompanying drawings, in which:
Figure 1 is a schematic diagram of a transmitter in accordance with an embodiment of the present invention.
Figure 2 is a schematic diagram of a structure comprising a wireless lighting system in accordance with an embodiment of the present invention.
Figure 3 is a schematic diagram of a receiver in accordance with an embodiment of the present invention.
Figure 4 is a schematic diagram of an example timing sequence in accordance with an embodiment of the present invention.
Figure 5 is a schematic diagram of an example timing sequence in accordance with an embodiment of the present invention.
Figure 6 is a schematic diagram of a structure comprising a wireless lighting system in accordance with an embodiment of the present invention.
Figure 7 is a schematic diagram of an override transmitter in accordance with an embodiment of the present invention.

A transmitter, a receiver and a wireless lighting system are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

### Transmitter

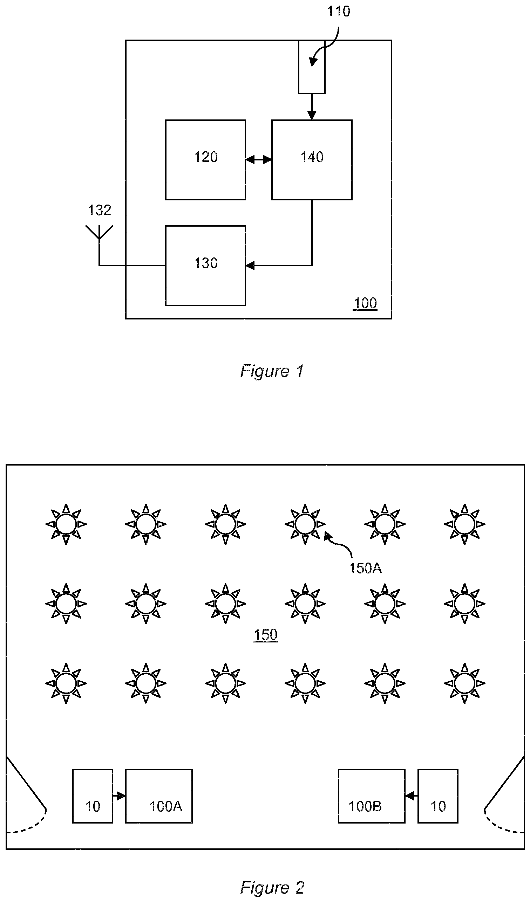

Turning now to Figure 1, in an embodiment of the present invention a transmitter 100 for a wireless lighting system comprises an input 110 for receiving an activation signal from a presence detector (not shown), a memory 120 arranged in operation to store a transmitter ID; and a radio transmitter 130. If required, the radio transmitter may comprise an external aerial 132.

The presence detector will be understood to typically be a conventional motion detector, operable for example to detect motion based upon detected changes in reflected infra-red, microwave or ultrasonic signals, or by image analysis of captured video images. Typically a presence detector is arranged in operation to output an activation signal upon detecting a threshold level of motion, and to output a deactivation signal (or equivalently cease outputting the activation signal) after a predetermined interval during which no further motion is detected above the threshold level. These signals may then be received by the transmitter via input 110.

The transmitter 100 comprises logic 140 operable to respond to signals received by the input 110. The logic may comprise a general purpose processor operating under suitable software instruction, or dedicated hardware such as an FGPA or ASIC, or may comprise discrete components, or any combination of these. The memory 120 may be part of this logic.

Consequently the transmitter is operable, in response to a first activation signal from the presence detector, to transmit a wireless signal comprising its transmitter ID and data indicating a length of time T for which a recipient light should turn on in response to the wireless signal. A receiver of the transmitter's signal is discussed in more detail later herein.

### Transmission timing

Referring now to Figure 2, in an example scenario a structure (such as a warehouse or car park) uses two presence detectors 10 to monitor occupancy in the space, and each presence detector is operably coupled to a respective transmitter 100A, 100B. The space also comprises an array of lights 150, each comprising a respective receiver that in this example responds to a transmission from either transmitter. Whilst in Figure 2 the presence detectors are each shown near a respective entrance, it will be understood that this is a non-limiting example and they may be placed anywhere suitable, such as for example spaced apart within the same area as the array of lights.

Whilst the transmission from each transmitter may be short (in the order of 1/100 of a second), it will be appreciated that it is possible that both transmitters, operating independently, will transmit their signals substantially at the same time (i.e. so that their signals either wholly or partially overlap and interfere with each other), making useable reception of either signal unlikely. Moreover, for example in the case of car-parks, it is notable that a commonly approved radio frequency for such wireless control signals coincides with the radio frequency for wireless key fobs used with many cars. Consequently when transmissions from a transmitter 100A or 100B coincide with a user locking or unlocking a car, lights in the vicinity of that car may not receive a useable signal from the transmitter for similar reasons.

Consequently, in an embodiment of the present invention, in response to the activation signal from a presence detector, a transmitter is operable to repeat transmission of its wireless signal at least once, after an interval of time comprising a random component.

As a non-limiting example, a transmitter may repeat transmission of its signal after 0.5 seconds with a random variation up to ±0.1 seconds, repeat it again after a total of 3 seconds with a random variation up to ± 0.5 seconds, and repeat it again after a total of 5 seconds with a random variation up to ±1 second. It will be appreciated that the number of repetitions, the distribution of repetitions, and the range of random variability may be selected at a designer's discretion. In particular it may be simpler to implement only an additional random value rather than also a subtractive random value, depending on how the timing is implemented. However as a general principle it will be understood that the average light activation success rate will be responsive to the number of repetitions and to a lesser extent the breadth of the random variability component, as together these reduce the probability of two signals on the same frequency interfering with each other.

### Transmitter duration value

Typically the data representing the length of time T is stored in the memory of the transmitter. As a non-limiting example, a default value of T may be 5940, indicating the number of seconds in a 99 minute period.

In an embodiment of the present invention, as noted above, when the transmitter receives a first activation signal from the presence detector it is arranged to transmit a wireless signal comprising its transmitter ID and data indicating a length of time T for which a recipient light should turn on.

The initial or default value of T may for example be 5940 seconds, and the transmitter sends this value to recipient lights. Consequently, these lights will then stay on for 99 minutes.

However, if the cause of activation (for example a person) leaves the area monitored by the presence detector coupled to this transmitter, the presence detector will send a deactivation signal (or equivalently stop sending an activation signal) after a pre-set duration of its own, such as 5 minutes.

In response, the transmitter is operable to measure the total elapsed time between the first activation signal and the eventual deactivation signal from the presence detector. Hence the transmitter may also comprise a timer, which for example may be part of logic 140.

To illustrate this function, if a person entered the monitoring area of transmitter's associated presence detector and was active for 7 minutes before leaving, and the presence detector has for example a pre-set time-out duration of 5 minutes, then the total elapsed time will be 12 minutes.

The transmitter may then replace its previously stored value of T with this elapsed time, on the assumption that this is more representative of actual use in its location. Alternatively it may combine the elapsed time with the currently stored time, for example as a rolling average, in order to converge on a representative duration that is less responsive to individual instances of atypical behaviour in its monitored area. Consequently the next time that the lights are turned on, in the above example they may turn on for either 12 minutes or 55.5 minutes (depending on how T is modified, as described above).

The above approach hence implements a system in which default times typically shorten (e.g. from 99 minutes) by learning the typical usage patterns in the locally monitored area.

Alternatively, the transmitter may have an initial default value of T of a similar order to (or slightly longer than) the pre-set duration of the presence detector, such as for example 300 seconds (5 minutes). In this case, assuming the same scenario as given above in which a user's activities result in an activation state lasting 12 minutes, the transmitter may operate as follows.

If a presence detector is activated for a period longer than the time T then the receiver could switch off after time T. To avoid this happening the transmitter transmits a further switch-on-for T seconds message before the end of the current T period. In this embodiment this is transmitted at time T / 2.

The transmitter repeats this process until it receives a deactivation signal from the presence detector. At this point it records the total elapsed time (in the above example 12 minutes or 720 seconds) and uses this as the subsequent initial value T, or again combines it with the existing value as a rolling average. Consequently the next time that the lights are turned on, in the above example they may turn on for either 12 minutes or 8.5 minutes (depending on how T is modified, as described above).

Hence this approach implements a system in which default times typically lengthen (e.g. from 5 minutes) by learning the typical usage patterns in the locally monitored area. This second approach may be of more use in systems where total power to the transmitter is regularly lost (e.g. once per day) and so learned duration values cannot be stored, and where an initial lighting period of 99 minutes or the like is undesirably long.

Hence more generally in both embodiments the transmitter is operable to measure the elapsed time between the activation signal from the presence detector and a subsequent deactivation signal from the presence detector, and is operable to modify the length of time T that is to be transmitted as data in subsequent wireless signal transmissions.

Optionally, in conjunction with either approach, the transmitter may be arranged to transmit a second control signal comprising its transmitter ID and an 'OFF' command, in response to an deactivation signal from the presence detector. How such an optional OFF command is handled by receivers at the lights is described later herein.

### Sensor Unit

It will be appreciated that whilst the transmitter has been described above as a stand-alone device for use in conjunction with a presence detector to which it can be operably coupled, the two devices may be integrated or housed together as a single wireless sensor unit.

### Receiver

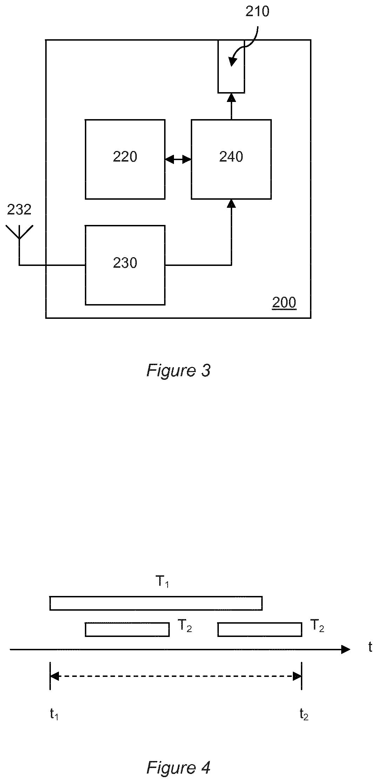

Referring now to Figure 3, in an embodiment of the present invention a receiver 200 for a wireless lighting system comprises a radio receiver 230, a memory 220, and an output 210 for transmitting a control signal to a light (not shown). If required, the radio receiver may comprise an external aerial 232.

The light can be a conventional light comprising a lamp and optionally control circuitry for controlling the lamp, for example to control voltage or current to the lamp, to control the brightness of the lamp or a duty cycle applied to the lamp, and/or to control how the lamp is turned on and off (e.g. whether instantaneously or ramped over a predetermined period). The lamp itself may be any conventional lamp, such as for example incandescent, fluorescent or LED.

The memory may comprise respective transmitter IDs for one or more transmitters previously associated with the receiver. The process of association is described later herein.

The receiver comprises logic 240 operable to send control signals to the light via the output 210. The logic is also operable to perform comparison functions. The logic may comprise a general purpose processor operating under suitable software instruction, or dedicated hardware such as an FGPA or ASIC, or may comprise discrete components, or any combination of these. The memory 220 may be part of this logic. The logic may also comprise a timer.

Consequently, the receiver is operable to receive, from a transmitter such as that described above, a wireless signal comprising a transmitter ID and data indicating a length of time T. In response, the receiver is operable to compare the received transmitter ID with the or each transmitter ID stored in the memory 220, and to detect if there is a match. In the event of a match, the receiver is operable to send one or more control signals via its output to cause a light to turn on for the indicated length of time T received in the wireless signal.

In this way, a receiver operably coupled to a light is able to turn on (activate, increase / restore brightness of) a light for a period of time T.

The control signal or signals may comprise discrete signals to initially turn on the light and subsequently (after the time period T) to turn off the light, or may equivalently comprise a signal to turn on the light that itself lasts for the time period T and then stops. Which signalling scheme is appropriate will depend on how the lamp is controlled in the light. Such controls are discussed later herein.

Notably therefore the receiver does not need a subsequent 'OFF' command to later turn off (deactivate, decrease brightness of) the light, as it will do this automatically when the length of time T has elapsed.

Also notably, the receiver does not send an acknowledgement signal to the transmitter, and the transmitter is not arranged to monitor for such acknowledgment signals. This avoids interference from a plurality of receivers acknowledging a commonly received signal from a transmitter. As noted previously, in the absence of an acknowledgement system, the transmitter may be arranged to send multiple instances of its wireless signal to increase the probability that any given receiver receives the wireless signal.

### Receiver timing

Referring now again to Figure 2, and with respect to a particular light 150A comprising a receiver 200, it will be appreciated that in the illustrated scenario the receiver may receive wireless signals from both of the transmitters (100A, 100B) whose respective IDs match transmitter IDs stored in the memory of the receiver. However, these transmitters may have learned to send data indicating different respective lengths of time Tᵢ.

Referring now also to Figure 4, in the present example scenario, transmitter 100A may have learned (as described previously) a length of time T₁ (e.g. of 20 minutes), whilst transmitter 100B may have learned a length of time T₂ (e.g. of 5 minutes) due to how different parts of the structure (e.g. a warehouse) are used, and/or because their associated presence detectors have different timeout settings.

Figure 4 shows time at an arbitrary scale on the x-axis, and schematically shows when a wireless signal was received by the receiver and what duration (T₁ or T₂) was indicated by that signal, by placing a block of length T₁ or T₂ with respect to the x-axis. It can be seen that the first signal to be received indicated a duration T₁, whilst the second and third signals to be received each indicated a duration T₂. Finally t₁ shows when the receiver outputted a control signal to turn its light on, and t₂ shows when the receiver outputted a control signal to turn its light off (or equivalently shows when it stopped outputting a signal to turn the light on).

From Figure 4 it will be understood that the receiver's response is similar to a logical 'OR' operation in respect of the extant durations. In other words, the receiver is operable to keep the light on until all the respective lengths of time Tᵢ have elapsed.

This may be implemented either by maintaining separate timers for each active duration Tᵢ, and only turning the light off once all timers have elapsed, or by comparing the current time plus a newly received duration with the time at which a currently running duration will elapse, and only replacing the currently running duration with the newly received duration starting now if the currently running duration would elapse sooner.

### Off signals

As noted previously, optionally transmitters may be operable to send 'OFF' signals when their associated presence detector signals that there is no-one present and that it has timed out.

However, referring again to Figure 2, it will be appreciated that if activity near transmitter 100A were to cease such that transmitter 100A were to wirelessly transmit an 'OFF' signal, but there was still activity near transmitter 100B, such that it has not transmitted an off signal, and that the respective durations Tᵢ originally transmitted by the transmitters 100A, 100B have not yet elapsed, it would be inappropriate for lighting array 150 to respond to the 'OFF' signal by switching off.

Hence, in an embodiment of the present invention, the memory 220 of a receiver 200 is operable to associate the data indicating a respective length of time Tᵢ with the respective one of the plurality of stored transmitter IDs (i.e. the transmitter ID matching the transmitter ID in the wireless signal that also comprised the data indicating that respective length of time). Similarly, the timer is operable to detect when each respective length of time Tᵢ has elapsed.

Consequently, the receiver is operable to disregard any subsequent wireless signal from any of the transmitters that indicates that the wireless receiver is to turn off a light, except when received from that transmitter associated with the final length of time Tᵢ that has yet to elapse.

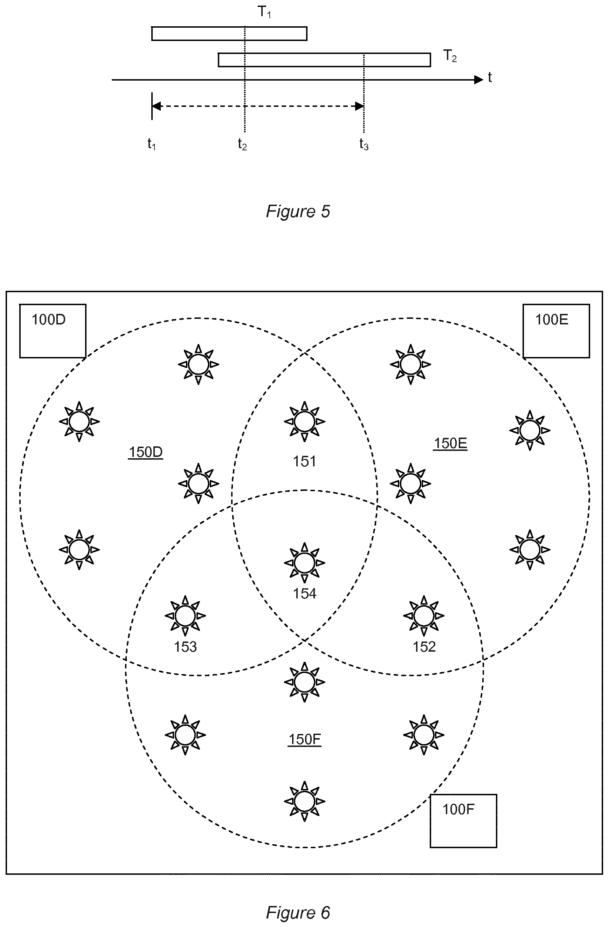

To give a specific example, referring now to Figure 5 this illustrates such a scenario. Figure 5 has a similar axis and schematic conventions to Figure 4. In the illustrated scenario, at time t₁ the first transmitter 100A initially sends a wireless signal to turn the lights on for a duration T₁. As a result the lights turn on. Then later the second transmitter 100B sends a wireless signal to turn the lights on for a duration T₂. Subsequently, at time t₂ the first transmitter 100A transmits an 'OFF' signal. However, because a duration associated with a different transmitter has not yet elapsed, this signal is ignored. Then later duration T₁ elapses. Subsequently, at time t₃ the second transmitter 100B sends an 'OFF' signal. This time, the only extant or pending duration T₂ is associated with the same transmitter 100B, and so the receiver responds to this signal and adjusts its output to turn the light off.

It will be appreciated that the logical 'OR' timing response and the optional final 'OFF' response schemes described above both serve to keep the lights on in a conservative manner; that is to say, the lights stay on as long as a most recent valid indication remains that they should stay on, whether that is from a timing duration or because a particular transmitter has not sent an 'OFF' signal.

As a result, and in conjunction with the fact that each receiver can maintain its own set of associated transmitters, this allows for overlapping sets of lights to be specified that are able to co-exist automatically by virtue of the above behaviour.

Referring to Figure 6, this shows a structure such as a warehouse comprising an array of lights arranged to form three notional sets of lights 150D, 150E and 150F. These sets are created by associating the lights in set 150D with transmitter 100D, the lights in set 150E with transmitter 100E, and the lights in set 150F with transmitter 100F (the presence detectors associated with these transmitters are not shown here for simplicity). Consequently the receiver in light 151 will store in its memory the transmitter IDs for both transmitter 100D and 100E. Similarly the receiver in light 152 will hold the IDs for transmitters 100E and 100F, whilst the receiver in light 153 will hold the IDs for transmitters 100F and 100D. Finally, the receiver in light 154 will hold the IDs for all three transmitters.

It will be understood that the above timing and 'OFF' response schemes mean that any light that is in overlapping sets will behave in accordance with the current behaviour of any set to which it belongs and in which the lights are currently on. Hence for example, light 153 will remain on if the conditions for lighting set 150F indicate that those lights should be on, even if separately a timing duration for set 150D has elapsed, or transmitter 100D is transmitting an 'OFF' signal. Similarly, light 153 will remain on if the conditions for lighting set 150D indicate that those lights should be on, even if separately a timing duration for set 150F has elapsed, or transmitter 100F is transmitting an 'OFF' signal.

### Retransmission

It is possible that some receivers will be in areas of the structure where reception is poor, due to either the distance from the transmitter or obstacles between transmitter and receiver. Consequently, in an embodiment of the present invention, some or all of the receivers may also comprise a transmitter (not shown) and their logic is operable to cause the receiver to operate as a re-transmitter or repeater, so that the effective range of a source transmitter is extended.

For example, the re-retransmission function may be enabled by pressing a button on the receiver. When the receiver is installed within a light unit (a so-called 'luminaire'), this button may be made accessible through a hole beneath the unit. This allows the receiver to be installed in the control-gear compartment of the luminaire whilst the button is accessible from a lamp compartment thereof. This is advantageous if the gear compartment is normally not accessible by the building's occupants whilst the lamp compartment is, allowing users to reconfigure the transmitter-receiver pairs and enable/disable re-transmit mode without the need for electrical training. Once in re-transmit mode the receiver re-transmits all signals received from currently linked transmitters, including on/off and link/unlink commands (see later herein).

Optionally the receiver may employ a delay with a random component prior to retransmission in order to reduce the chances of interference between repeating receivers. Similarly the delay may be different to the delays and delay intervals of the original transmitter's transmission timing scheme.

Similarly optionally, the receiver may include a flag (or switch an existing flag) in the retransmitted data to signify that it has been re-transmitted, and receivers are operational not to re-transmit such re-transmitted versions of the wireless signal again in order to avoid endless loops of retransmission. Similarly a counter could be incremented in the data, enabling up to N retransmissions where *N* is a predetermined value.

### Light unit

It will be appreciated that whilst the receiver has been described above as a stand-alone device for use in conjunction with a light to which it can be operably coupled, the two devices may be integrated or housed together as a single lighting unit.

Where the light is simply a lamp, or where it is desired to simply turn the lamp on and off, then the output from the receiver may control an electrical property of a live connection to the lamp, thereby controlling the provision of electricity to it.

Where the light comprises a lamp and a driver or control circuit such as a so-called electrical ballast, then the output from the receiver may control an electrical property of a so-called switched live connection to the electrical ballast. The ballast may then respond to the output in a pre-defined manner, for example ramping the brightness of the lamp up from a predetermined minimum in response to an output signal to turn the light on, and ramping the brightness of the lamp down to a predetermined minimum in response to an output signal to turn the light off (or in response to a cessation of the 'on' signal). The ramping rate is typically determined by the ballast, as is the predetermined minimum. The minimum itself will typically be in the range 0% to 20% of maximum brightness, but may be set higher, for example for a light unit mounted near an emergency exit.

It will be appreciated however that any suitable output signal coupled to any suitable control of the brightness or activation of the light may be applicable to achieve wireless control of the light in this manner.

In a embodiment of the present invention, the receiver communicates with the light via a volt-free relay with three connections: Common, Normally Open and Normally closed. This may be configured as a switched live output by connecting the mains voltage incoming live to the Common connection and use the Normally Open output connection for the lamp. This may be used to turn the light on or off, or in conjunction with an appropriate electrical ballast, between a predetermined maximum and minimum brightness as described previously. Optionally a 1-10v control signal or a digital control signal such as DSI or DALI may be used if the driver of the light unit supports these, and may be used to dim or switch the lights on or off, again via a relay output.

Hence more generally the output from the receiver may be used to control a relay, with the output from the relay directly or indirectly (e.g. via a driver) controlling the lamp.

### Wireless lighting system

It will be understood that a wireless lighting system is obtained when receivers become associated with transmitters.

Hence a wireless lighting system comprises one or more transmitters as described above, and typically a plurality of receivers as described above that are each operably associated with one or more of the transmitters (by storing their transmitter IDs in memory), in a similar manner to the scenarios illustrated in the non-limiting examples of Figures 2 and 6.

A receiver may be associated with a transmitter as follows.

The receiver may comprise a user input (for example a button or switch) that when activated causes the receiver to enter a remote-link mode (i.e. a transmitter association mode), for example either for a predetermined period or for the duration that the user input is activated. As with the retransmission mode button, this button may be accessible via a hole between a control gear compartment and a lamp compartment of a light unit.

Whilst in this mode, the receiver will add to its memory the transmitter ID found in a wireless signal received from any transmitter of the lighting system.

The transmitter similarly can comprise a user input that upon activation causes it to transmit a wireless signal comprising its transmitter ID, for example every 2 seconds whilst the user input is activated.

Consequently a transmitter and receiver can be associated with each other by activating their respective user inputs during overlapping times, causing the transmitter to transmit its transmitter ID, and the receiver to store the received transmitter ID in its memory.

It will be appreciated however that it may not be practical to activate the user input of a receiver once it is mounted in a lighting unit that itself is located in an inaccessible place such as near a warehouse ceiling.

Consequently, in an embodiment of the present invention, the receivers 200 are arranged to automatically enter the transmitter association mode for a predetermined period of time after they are initially provided with power. Thus for example, resetting a power breaker may place all the lights in a ceiling array into the transmitter association mode for 30 seconds, during which time the or each transmitter with which these lights are to be associated can be made to transmit their IDs by activating their user inputs.

In the absence of a wireless acknowledgement system, a receiver may acknowledge that it has stored a new transmitter ID by changing its outputted control signal for a predetermined period of time. Hence for example a light may dim for 10 seconds to indicate that it has become associated.

It will be appreciated that a combination of both approaches may be used to associate lights with transmitters. For example the majority of lights may be set automatically, with only a few (for example where they represent overlapping sets) being additionally manually associated with one or more additional transmitters.

### Other embodiments

### Dimmer values

In an embodiment of the present invention, the wireless transmission from a transmitter also comprises a dimming value D, indicating a desired brightness level for a light, for example as a value from a minimum percentage to 100%. The receiver then operates as previously described, but when outputting a signal to turn a light on, also outputs a signal appropriate to indicate the desired brightness. A light control circuit operable to control brightness may then respond accordingly. Such dimming values may for example be responsive to a 24 hour schedule, or to a value received from daylight sensor.

In the case where a receiver has received wireless signals from several transmitters, then it can select the brightest value Dᵢ associated with the currently extant / pending durations Tᵢ.

### Overrides - Daylight

Conventionally, some lighting units are equipped with a photocell, photoresistor or other light sensor, to indicate when a threshold level of ambient light is present (i.e. when there is sufficient daylight) and hence to indicate when the light should be overridden to stay off. However, setting this threshold level is difficult. At installation, the ambient light conditions in an empty structure may be very different to when the structure is in use. For example an empty warehouse with a concrete floor will subsequently have different ambient light levels when fully stocked with white goods. This makes daylight-override systems for lighting units unpredictable.

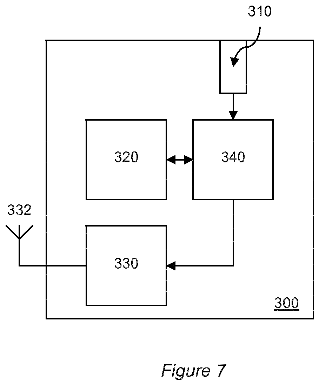

Consequently, referring now to Figure 7, in an embodiment of the present invention an override transmitter 300 for a wireless lighting system is operably coupled to a light sensor (not shown), and the override transmitter comprises an input 310 for receiving a light level signal from the light sensor, a memory 320 arranged in operation to store a transmitter ID; and a radio transmitter 330. If required, the radio transmitter may comprise an external aerial 332.

The override transmitter also comprises logic 340. The logic may comprise a general purpose processor operating under suitable software instruction, or dedicated hardware such as an FGPA or ASIC, or may comprise discrete components, or any combination of these. The memory 320 may be part of this logic.

The logic 340 is operable to detect whether a signal from the light sensor satisfies a threshold criterion, and if so, to cause the override transmitter to transmit a signal indicating that a recipient light should be off (i.e. to turn off if currently on, or if it is already off then that it should not respond to a request to turn on by another transmitter for a period of time).

Consequently a single light detector may be placed in a position representative of daylight conditions and be operably coupled to the override transmitter. When the sensor signal satisfies a threshold criterion (i.e. that the ambient daylight is sufficiently bright), then the transmitter transmits a wireless signal comprising its transmitter ID.

Receivers associated with this override transmitter, upon receiving the transmitter ID, are operable to recognise that it is a signal from an override transmitter (for example because there is a qualitative difference in ID values between normal activation transmitters and daylight override transmitters, such as using a reserved bit in the ID as a flag). In response, the receivers will switch their associated light off (or dim it to a predetermined minimum, etc., as described previously).

Optionally in this embodiment, the receiver may be arranged to switch the light off for a period of N seconds in these circumstances. Meanwhile the override transmitter is operable to periodically send repeat transmissions (providing the sensor signal still satisfies the threshold criterion) at intervals of M seconds. In this case M is smaller than N, for example two or three times smaller.

In this way a light won't turn on again in response to any other activation signal if it happens to miss (N/M)-1 subsequent transmissions of the override transmitter. The value M may for example be selected at the discretion of a particular lighting system designer.

It will also be appreciated that the override transmitter may employ hysteresis to avoid rapidly changing between overriding and not overriding the system in marginal lighting conditions near to the threshold criterion.

### Overrides - Manual

In an embodiment of the present invention, a receiver may have a predetermined override Transmitter ID stored in a ROM or otherwise pre-set, so that it can always be controlled by a predetermined override Transmitter that uses this predetermined Transmitter ID. This allows for users for example to have a global key-fob which brings all lighting up to 100% without any need for linking. Such a transmitter may also be coupled to an alarm system such as a fire alarm.

### Overrides - Thermal

Dimming Fluorescent lamps can damage the lamps if the temperature is too cold. Consequently in an embodiment of the present invention, a Thermal over-ride transmitter is used that inhibits any off signals being sent or on signals timing-out whilst the temperature is below a preset minimum. The transmitter may operate in a similar manner to the daylight override transmitter, but instead takes its input from a thermocouple. Indeed, optionally a single transmitter takes inputs from a light sensor and temperature sensor and operates with respect to each as described above. This transmitter might similarly use the above-described predetermined override Transmitter ID so that all receivers respond without needing to be linked.

## Claims

1. A transmitter (100) for a wireless lighting system, comprising:
an input (110) for receiving an activation signal from a presence detector;
a memory (120) arranged in operation to store a transmitter ID; and
a radio transmitter; (130) and in which in response to a first activation signal from the presence detector, the transmitter is **characterized in that** it is arranged in operation to transmit a wireless signal comprising the transmitter ID and data indicating a length of time T for which a recipient light should be kept turned on in response to the wireless signal.

2. A transmitter according to claim 1, in which the transmitter is arranged in operation to repeat transmission of the wireless signal at least once after an interval of time comprising a random component.

3. A transmitter according to claim 1 or claim 2, comprising:
a timer; and in which
the transmitter is operable to measure the elapsed time between the activation signal from the presence detector and a subsequent deactivation signal from the presence detector, and is operable to modify the length of time T to be transmitted as data in subsequent wireless signal transmissions in response to the measured elapsed time.

4. A sensor unit, comprising:
a transmitter according to any one of the preceding claims; and
whereby the presence detector is operably coupled to the input of the transmitter.

5. A receiver (200) for a wireless lighting system, comprising
an output (210) for sending a control signal to a light;
a memory (220) arranged in operation to store one or more transmitter IDs of transmitters with which the receiver has been associated;
a timer; and
a radio receiver; (230) and in which in response to receiving a wireless signal comprising one of the transmitter IDs and data indicating a length of time T, the receiver is operable to compare the received transmitter ID with the or each of the stored transmitter IDs, and in the event of a match is operable to output one or more control signals to cause a light to be kept turned on for the indicated length of time T.

6. A receiver according to claim 5, in which upon receiving wireless signals from a plurality of transmitters whose respective IDs match transmitter IDs stored in the memory and which each indicate respective lengths of time Tᵢ, the receiver is operable to keep the light on until all the respective lengths of time have elapsed.

7. A receiver according to claim 5, in which the receiver receives wireless signals from a plurality of transmitters whose respective IDs match transmitter IDs stored in the memory and which each indicate respective lengths of time Tᵢ, and in which:
the memory is operable to associate the data indicating a respective length of time Tᵢ with a respective one of the plurality of stored transmitter IDs;
the timer is operable to detect when each respective length of time Tᵢ has elapsed; and
the receiver is operable to disregard any subsequent wireless signal from any of the transmitters that indicates that the receiver is to turn off a light, except when received from that transmitter associated with the final length of time Tᵢ that has yet to elapse.

8. A lighting unit, comprising:
a lamp for providing illumination;
and a receiver according to any one of claims 5 to 7.

9. A lighting unit according to claim 8, in which the receiver is arranged to control an electrical property on one selected from the list consisting of:
i. a live connection to the lamp to control switching the lamp on and off;
ii. a switched live connection to an electrical driver of the light to control switching the lamp between two predetermined brightness levels; and
iii. a relay, the output of which directly or indirectly controls the behaviour of the lamp.

10. A wireless lighting system comprising:
at least one transmitter according to any one of claims 1 to 3; and
at least one receiver according to any one of claims 5 to 7, each one of them operably associated with each one of the transmitters.

11. The wireless lighting system of claim 10, in which:
each one of the transmitters comprises a user input; and
each one of the receivers comprises a user input; and in which a transmitter can be associated with a receiver by activating the user input on each of the receiver and transmitter, the transmitter being operable in response to the activation of its user input to transmit its transmitter ID, and the receiver being operable in response to activation of its user input to store any received transmitter ID in its memory.

12. The wireless lighting system of claim 10, in which:
each one of the transmitters is operable to transmit its transmitter ID upon activation of a user input; and
one of the receivers is operable to enter a transmitter association mode for a predetermined period of time after being initially provided with power, in which each receiver is respectively operable to store any received transmitter ID in its memory.

13. The wireless lighting system of claim 11 or claim 12, in which:
each respective receiver is operable to change its outputted control signal or signals for a predetermined period of time in response to storing a new transmitter ID in its memory.

14. The wireless lighting system according to any one of claims 10 to 13, comprising:
an override transmitter operably coupled to a light sensor, the override transmitter comprising:
logic to detect whether a signal from the light sensor satisfies a threshold criterion; and
a radio transmitter; and in which
if the signal from the light sensor satisfies the threshold criterion, the override transmitter is operable to periodically transmit a signal indicating that a recipient light should be off.

15. The wireless lighting system according to any one of claims 10 to 13, comprising:
an override transmitter operably coupled to a thermal sensor, the override transmitter comprising:
logic to detect whether a signal from the thermal sensor satisfies a threshold criterion; and
a radio transmitter; and in which
if the signal from the thermal sensor satisfies the threshold criterion, the override transmitter is operable to periodically transmit a signal indicating that a recipient light should remain on.

## Patentansprüche

1. Sender (100) für ein drahtloses Beleuchtungssystem, der Folgendes enthält:
einen Eingang (110) zum Empfangen eines Aktivierungssignals von einer Anwesenheitserkennungseinrichtung;
einen Speicher (120), der ausgelegt ist, im Betrieb eine Senderkennung zu speichern; und
einen Funksender (130);
wobei der Sender **dadurch gekennzeichnet ist, dass** er ausgelegt ist, im Betrieb als Antwort auf ein erstes Aktivierungssignal von der Anwesenheitserkennungseinrichtung ein drahtloses Signal zu senden, das die Senderkennung und Daten, die eine Dauer T angeben, für die eine Empfängerlichtquelle als Antwort auf das drahtlose Signal eingeschaltet gehalten werden soll, enthält.

2. Sender nach Anspruch 1, wobei der Sender ausgelegt ist, im Betrieb das Senden des drahtlosen Signals mindestens einmal nach einem Zeitintervall, das eine zufällige Komponente enthält, zu wiederholen.

3. Sender nach Anspruch 1 oder 2, der Folgendes enthält:
einen Zeitgeber; wobei
der Sender betreibbar ist, die Zeit, die zwischen dem Aktivierungssignal von der Anwesenheitserkennungseinrichtung und einem nachfolgenden Deaktivierungssignal von der Anwesenheitserkennungseinrichtung verstrichen ist, zu messen, und betreibbar ist, die Dauer T, die als Daten in aufeinanderfolgenden drahtlosen Signalübertragungen gesendet werden soll, als Antwort auf die gemessene verstrichene Zeit zu verändern.

4. Sensoreinheit, die Folgendes enthält:
einen Sender nach einem der vorhergehenden Ansprüche; wobei
die Anwesenheitserkennungseinrichtung betriebstechnisch an den Eingang des Senders gekoppelt ist.

5. Empfänger (200), für ein drahtloses Beleuchtungssystem, der Folgendes enthält:
einen Ausgang (210) zum Senden eines Steuersignals zu einer Lichtquelle;
einen Speicher (220), der ausgelegt ist, im Betrieb eine oder mehrere Senderkennungen von Sendern zu speichern, denen der Empfänger zugeordnet worden ist;
einen Zeitgeber; und
einen Funkempfänger (230);
wobei der Empfänger als Antwort auf das Empfangen eines drahtlosen Signals, das eine der Senderkennungen und Daten, die eine Dauer T angeben, enthält, betreibbar ist, die empfangene Senderkennung mit der oder jeder der gespeicherten Senderkennungen zu vergleichen, und betreibbar ist, im Falle einer Übereinstimmung ein oder mehrere Steuersignale auszugeben, um zu bewirken, dass eine Lichtquelle für die angezeigte Dauer T eingeschaltet gehalten wird.

6. Empfänger nach Anspruch 5, wobei nach dem Empfangen von drahtlosen Signalen von mehreren Sendern, deren jeweilige Kennungen mit Senderkennungen, die in dem Speicher gespeichert sind, übereinstimmen und die jeweils entsprechende Dauern Tᵢ angeben, der Empfänger betreibbar ist, die Lichtquelle eingeschaltet zu halten, bis alle entsprechenden Dauern verstrichen sind.

7. Empfänger nach Anspruch 5, wobei der Empfänger drahtlose Signale von mehreren Sendern empfängt, deren entsprechende Kennungen mit Senderkennungen, die in dem Speicher gespeichert sind, übereinstimmen und die jeweils entsprechende Dauern Tᵢ angeben, wobei
der Speicher betreibbar ist, die Daten, die eine entsprechende Dauer Tᵢ angeben, einer entsprechenden der mehreren gespeicherten Senderkennungen zuzuordnen;
der Zeitgeber betreibbar ist, zu detektieren, wann jede entsprechend Dauer Tᵢ verstrichen ist; und
der Empfänger betreibbar ist, jedes beliebige nachfolgende drahtlose Signal von einem beliebigen Sender, das angibt, dass der Empfänger eine Lichtquelle ausschalten soll, zu ignorieren, außer wenn es von dem Sender empfangen wird, der der endgültigen Dauer Tᵢ zugeordnet ist, die noch verstreichen muss.

8. Beleuchtungseinheit, die Folgendes enthält:
eine Lampe zum Bereitstellen von Beleuchtung; und
einen Empfänger nach einem der Ansprüche 5 bis 7.

9. Beleuchtungseinheit nach Anspruch 8, wobei der Empfänger ausgelegt ist, eine elektrische Eigenschaft eines der Elemente der Liste zu steuern, die aus Folgendem besteht:
i. eine aktive Verbindung zu der Lampe, um das Ein- und Ausschalten der Lampe zu steuern;
ii. eine geschaltete aktive Verbindung zu einem elektrischen Treiber der Lichtquelle, um das Schalten der Lampe zwischen zwei vorgegebenen Helligkeitspegeln zu steuern; und
iii. ein Relais, dessen Ausgangssignal das Verhalten der Lampe direkt oder indirekt steuert.

10. Drahtloses Beleuchtungssystem, das Folgendes umfasst:
mindestens einen Sender nach einem der Ansprüche 1 bis 3; und
mindestens einen Empfänger nach einem der Ansprüche 5 bis 7, von denen jeder in Verbindung mit jedem der Sender betreibbar ist.

11. Drahtloses Beleuchtungssystem nach Anspruch 10, wobei
jeder der Sender eine Anwendereingabe umfasst; und
jeder der Empfänger eine Anwendereingabe umfasst;
wobei
ein Sender einem Empfänger durch Aktivieren der Anwendereingabe an dem Empfänger und dem Sender zugeordnet werden kann, wobei der Sender als Antwort auf die Aktivierung seiner Anwendereingabe betreibbar ist, jede empfangene Senderkennung in seinem Speicher zu speichern.

12. Drahtloses Beleuchtungssystem nach Anspruch 10, wobei
jeder der Sender betreibbar ist, seine Senderkennung aufgrund der Aktivierung einer Anwendereingabe zu senden; und
einer der Empfänger betreibbar ist, nachdem er anfänglich mit Leistung versorgt wird, für einen vorgegebenen Zeitraum in einen Senderzuordnungsmodus einzutreten, in dem jeder Empfänger jeweils betreibbar ist, jede empfangene Senderkennung in seinem Speicher zu speichern.

13. Drahtloses Beleuchtungssystem nach Anspruch 11 oder 12, wobei
jeder entsprechende Empfänger betreibbar ist, das oder die von ihm ausgegebenen Steuersignale als Antwort auf ein Speichern einer neuen Senderkennung in seinem Speicher für einen vorgegebenen Zeitraum zu ändern.

14. Drahtloses Beleuchtungssystem nach einem der Ansprüche 10 bis 13, das Folgendes enthält
einen Vorrangsender, der betriebstechnisch an einen Lichtsensor gekoppelt ist, wobei der Vorrangsender Folgendes umfasst:
eine Logik, um zu detektieren, ob ein Signal von dem Lichtsensor ein Schwellenwertkriterium erfüllt; und
einen Funksender; wobei
dann, wenn das Signal von dem Lichtsensor das Schwellenwertkriterium erfüllt, der Vorrangsender betreibbar ist, regelmäßig ein Signal zu senden, das anzeigt, dass eine Empfängerlichtquelle ausgeschaltet sein sollte.

15. Drahtloses Beleuchtungssystem nach einem der Ansprüche 10 bis 13, das Folgendes enthält:
einen Vorrangschalter, der funktionell an einen Wärmesensor gekoppelt ist, wobei der Vorrangschalter Folgendes umfasst:
eine Logik, um zu detektieren, ob ein Signal von dem Wärmesensor ein Schwellenwertkriterium erfüllt; und
einen Funksender; wobei
dann, wenn das Signal von dem Wärmesensor das Schwellenwertkriterium erfüllt, der Vorrangsender betreibbar ist, regelmäßig ein Signal zu senden, das anzeigt, dass eine Empfängerlichtquelle eingeschaltet bleiben soll.

## Revendications

1. Émetteur (100) pour un système d'éclairage sans fil, comprenant :
une entrée (110) pour recevoir un signal d'activation d'un détecteur de présence ;
une mémoire (120) agencée en fonctionnement pour stocker un ID d'émetteur ; et
un émetteur radio (130) ; et dans lequel
en réponse à un premier signal d'activation du détecteur de présence, l'émetteur est **caractérisé en ce qu'**il est agencé en fonctionnement pour transmettre un signal sans fil comprenant l'ID de l'émetteur et indiquant une durée T pendant laquelle une lumière de récepteur doit être maintenue allumée en réponse au signal sans fil.

2. Émetteur selon la revendication 1, dans lequel l'émetteur est agencé en fonctionnement pour répéter la transmission du signal sans fil au moins une fois après un intervalle de temps comprenant une composante aléatoire.

3. Émetteur selon la revendication 1 ou la revendication 2, comprenant :
une minuterie ; et dans lequel
l'émetteur est utilisable pour mesurer le temps écoulé entre le signal d'activation du détecteur de présence et un signal de désactivation subséquent du détecteur de présence, et est utilisable pour modifier la durée T à transmettre comme données dans des transmissions de signaux sans fil subséquentes en réponse au temps écoulé mesuré.

4. Unité de capteur, comprenant :
un émetteur selon l'une quelconque des revendications précédentes ;
moyennant quoi le détecteur de présence est couplé de manière opérationnelle à l'entrée de l'émetteur.

5. Récepteur (200) pour un système d'éclairage sans fil, comprenant :
une sortie (210) pour envoyer un signal de commande à une lumière ;
une mémoire (220) agencée en fonctionnement pour stocker un ou plusieurs ID d'émetteur d'émetteurs auxquels le récepteur a été associé ;
une minuterie ; et
un récepteur radio (230) ; et dans lequel,
en réponse à la réception d'un signal sans fil comprenant l'un des ID d'émetteur et de données indiquant une durée T, le récepteur peut être utilisé pour comparer l'ID d'émetteur reçu avec le ou chacun des ID d'émetteur stockés et, en cas de concordance, peut être utilisé pour délivrer en sortie un ou plusieurs signaux de commande pour faire en sorte qu'une lumière reste allumée pendant la durée indiquée T.

6. Récepteur selon la revendication 5, dans lequel, lors de la réception de signaux sans fil provenant d'une pluralité d'émetteurs dont les ID respectifs correspondent à des ID d'émetteur stockés dans la mémoire et qui indiquent chacun des durées respectives Tᵢ, le récepteur est utilisable pour garder la lumière allumée jusqu'à ce que toutes les durées respectives se soient écoulées.

7. Récepteur selon la revendication 5, dans lequel le récepteur reçoit des signaux sans fil d'une pluralité d'émetteurs dont les ID respectifs correspondent à des ID d'émetteur stockés dans la mémoire et qui indiquent chacun des durées respectives Tᵢ, et dans lequel :
la mémoire est utilisable pour associer les données indiquant une durée respective Tᵢ à un identifiant respectif de la pluralité d'ID d'émetteur stockés ;
la minuterie est utilisable pour détecter le moment où chaque durée respective Tᵢ s'est écoulée ; et
le récepteur est utilisable pour ne tenir compte d'aucun signal sans fil subséquent provenant de l'un quelconque des émetteurs qui indique que le récepteur doit éteindre une lumière, sauf lorsqu'il est reçu de l'émetteur associé à la durée finale Tᵢ qui ne s'est pas encore écoulée.

8. Unité d'éclairage, comprenant :
une lampe destinée à l'éclairage ;
et un récepteur selon l'une quelconque des revendications 5 à 7.

9. Unité d'éclairage selon la revendication 8, dans laquelle le récepteur est agencé pour commander une propriété électrique sur une connexion sélectionnée dans la liste suivante :
i. une connexion sous tension à la lampe pour commander l'allumage et l'extinction de la lampe ;
ii. une connexion sous tension commutée à un circuit d'attaque électrique de la lumière pour commander la commutation de la lampe entre deux niveaux de luminosité prédéterminés ; et
iii. un relais dont la sortie commande directement ou indirectement le comportement de la lampe.

10. Système d'éclairage sans fil comprenant :
au moins un émetteur selon l'une quelconque des revendications 1 à 3 ; et
au moins un récepteur selon l'une quelconque des revendications 5 à 7, chacun d'entre eux étant associé de manière opérationnelle à chacun des émetteurs.

11. Système d'éclairage sans fil selon la revendication 10, dans lequel :
chacun des émetteurs comprend une entrée d'utilisateur ; et
chacun des récepteurs comprend une entrée d'utilisateur ; et dans lequel
un émetteur peut être associé à un récepteur en activant l'entrée d'utilisateur sur chacun du récepteur et de l'émetteur, l'émetteur pouvant être utilisé, en réponse à l'activation de son entrée d'utilisateur, pour transmettre son ID d'émetteur, et le récepteur pouvant être utilisé, en réponse à l'activation de son entrée d'utilisateur, pour stocker tout ID d'émetteur reçu dans sa mémoire.

12. Système d'éclairage sans fil selon la revendication 10, dans lequel :
chacun des émetteurs est utilisable pour transmettre son ID d'émetteur lors de l'activation d'une entrée d'utilisateur ; et
un des récepteurs est utilisable pour passer dans un mode d'association d'émetteurs pendant une période de temps prédéterminée après avoir été initialement alimenté en tension, où chaque récepteur est respectivement utilisable pour stocker tout ID d'émetteur reçu dans sa mémoire.

13. Système d'éclairage sans fil selon la revendication 11 ou la revendication 12, dans lequel : chaque récepteur respectif est utilisable pour modifier son ou ses signaux de commande de sortie pendant une période de temps prédéterminée en réponse au stockage dans sa mémoire d'un nouvel ID d'émetteur.

14. Système d'éclairage sans fil selon l'une quelconque des revendications 10 à 13, comprenant :
un émetteur de dérogation couplé de manière opérationnelle à un capteur de lumière, l'émetteur de dérogation comprenant :
une logique pour détecter si un signal provenant du capteur de lumière satisfait à un critère seuil ; et
un émetteur radio ; et dans lequel
si le signal provenant du capteur de lumière satisfait au critère seuil, l'émetteur de dérogation est utilisable pour transmettre de manière périodique un signal indiquant qu'une lumière de récepteur doit être éteinte.

15. Système d'éclairage sans fil selon l'une quelconque des revendications 10 à 13, comprenant :
un émetteur de dérogation couplé de manière opérationnelle à un capteur thermique, l'émetteur de dérogation comprenant :
une logique pour détecter si un signal provenant du capteur thermique satisfait un critère seuil ; et
un émetteur radio ; et dans lequel
si le signal provenant du capteur thermique satisfait le critère seuil, l'émetteur de dérogation est utilisable pour transmettre périodiquement un signal indiquant qu'une lumière de récepteur doit rester allumée.
